# EUROPEAN PATENT APPLICATION

(11) **EP 2 381 185 A2**
(43) Date of publication of application: **26.10.2011**
(21) Application number: 09822211.0
(22) Date of filing: 21.10.2009
(51) Int. Cl.: F24H 1/10, F24D 3/10, F24H 9/02, F24H 9/20

(54) **NATURAL CIRCULATION MODE BOILER FOR HEATING**

(30) Priority: 22.10.2008 CN 200810157986
(71) Applicant: Weihai Kebisimuye Youxiangongsi, Shandong 264-200 (CN)
(72) Inventor: CHO, Dong Won, Seoul 138-855 (KR)
(74) Representative: Grünecker, Kinkeldey, Stockmair & Schwanhäusser
(86) International application number: PCT/KR2009/006102
(87) International publication number: WO 2010/047535

(57) **Abstract**

The present invention relates to the natural circulation boiler for heating, which includes a water tank wherein the height of one side is formed to be lower than the height of the other side to include a water storage part wherein water is stored, and a water inlet is formed on the top of the one side, a check valve installed at the bottom of the water tank, and including a body part, a top connection part formed on the top of the body part, a bottom connection part formed at the bottom of the body part and a backflow prevention plate that opens or blocks the flow path of the top connection part, a water discharge tube wherein one end thereof is connected with the bottom connection part of the check valve and the other end thereof is connected with the top connection part of the check valve, an electric heater wherein one end thereof is connected with the bottom connection part of the check valve to heat the water supplied from the water tank, a discharge tube connected with the other end of the electric heater to feed the water heated at the electric heater to a heating zone, a water tank suction part formed to interface with a hole formed at the bottom of the other side of the water tank, a suction tube whose one end is connected with the water tank suction part, and a pressure reduction tube formed such that one end interfaces with the suction tube, and the other end interfaces with the air storage part on the top of the other side of the water tank.

## Description

### CLAIM FOR PRIORITY

This application is based on and claims priority to Korean Patent Application No. filed on , in the Korean Intellectual Property Office (KIPO), the entire contents of which are hereby incorporated by reference.

### BACKGROUND

### 1. Field of the Invention

The present invention relates to a natural circulation boiler for heating, and more particularly, to a natural circulation boiler for heating that can provide simple usage of parts, easy assembling and enhanced safety.

### 2. Description of the Related Art

Generally, a boiler includes a boiler proper for producing hot water and a hot water pipe, embedded in the floor mat of the living room and other rooms, or in the bed, for receiving the water heated at the boiler proper and heating the floor of the living room or other rooms with the heat of hot water.

The boiler proper is equipped with two communicating vessels, wherein one end is used as a discharge channel and the other end used as a suction channel. In the discharge channel, a circulation pump is provided for discharging hot water in the boiler proper to a heating pipe. Moreover, if the boiler proper is operated, cool water is heated by a predetermined heat source and turned into hot water in the boiler proper. At this time, according as the circulation pump starts to be operated, hot water heated at the boiler proper is discharged through the discharge channel and flowed through the heating pipe. As hot water flowing through heating pipe is heating the floor of the living room or other rooms, it becomes colder then low-temperature hot water. Then, water getting colder in the heating pipe is flowed again through the suction channel into the boiler proper and then is reheated.

A boiler according to the prior art requires a circulation pump to supply hot water to a heating zone. Moreover, a boiler according to another system of the prior art uses a check valve. However, in such system the check valve is placed in a water tank, which leads to difficult assembling and high probability of defect occurrence. In case of a closed-type boiler according to another system, a heater is installed at the bottom to make the heated water ascend. Here, a suction tube connected with a pressure reduction tube is installed below a discharge tube, which makes high pressure according to circulation of water. Accordingly, there are some problems such as limitation of used materials and increase of production cost, because the boiler's water tank and pipes are required to be made of not plastic but metal materials, in order to endure high pressure.

### SUMMARY

Accordingly, an object of the present invention is to provide a natural circulation boiler for heating which can lead to simple usage of parts, easy assembling, safety enhancement and substitution of materials for boiler pipes by plastics and faster heating of heating zones.

Additional advantages, objects and features of the invention will be set forth in part in the description which follows and in part will become apparent to those having ordinary skill in the art upon examination of the following or may be learned from practice of the invention.

According to an aspect of the present invention, there can be provided a natural circulation boiler for heating, which includes a water tank wherein the height of one side is formed to be lower than that of the other side to include a water storage part wherein water is stored and an air storage part wherein air is stored, and a water inlet is formed on the top of the one side; a check valve installed at the bottom of the water tank, including a body part, a top connection part formed on the top of the body part, a bottom connection part formed at the bottom of the body part and a backflow prevention plate that opens and blocks the flow path of the top connection part; a water tank discharge tube wherein one end is connected with a hole formed at the bottom of one side of the water tank, and the other end is connected with the top connection part of the check valve; an electric heater wherein one end is connected with the bottom connection part of the check valve to heat the water supplied from the water tank; a discharge tube connected with the other end of the electric heater to feed the water heated at the electrical heater to a heating zone; a water tank suction part that is formed to interface with the hole formed at the bottom of the other side of the water tank; a suction tube whose one end is connected with the water tank suction part; and a pressure reduction tube that is formed to enable one end to interface with the suction tube and the other end to interface with the air storage part on the top of the other side of water tank.

The electric heater includes the first and second heating tanks, and a heater is installed between the heating tanks.

The natural circulation boiler for heating may further include a safety valve installed in the discharge tube.

The natural circulation boiler for heating may further include a safety valve installed in the pressure reduction tube.

Moreover, the natural circulation boiler may further include a water level sensor that is installed at the bottom of the water tank to detect the water level of the water stored in the water tank.

The plane shape of the backflow prevention plate of the check valve is formed to correspond to the shape of the top connection part, and the size thereof is formed larger than the diameter of the top connection part.

The side shape of the backflow prevention plate of the check valve is formed to have the central area swollen downward.

The backflow prevention plate of the check valve is formed in a flat shape, and a plurality of grooves is formed on the top side of the body part of the check valve.

The check valve may further include a spring member installed on the top of the backflow prevention plate.

Moreover, the natural circulation boiler for heating may further include a connection tube that interfaces with the suction tube and the discharge tube; a pressure control valve installed at the connection tube; an d a pressure sensor that senses a pressure applied to the connection tube and controls the operation of the pressure control valve and the electric heater according to sensed results.

According to another aspect of the present invention, there can be provided a natural circulation boiler for heating, which includes: a water tank wherein the height of one end is formed to be lower than that of the other end to include a water storage part wherein water is stored and an air storage part wherein air is stored, and a water inlet is formed on the top of the one side; a variable airbag installed on the top of the other side of the water tank; the first part connected to the variable airbag that is formed on one side of the variable airbag to be connected with the air storage part of the water tank; an air discharge valve connected with the variable airbag through the second part connected to the variable airbag that is formed on one side or the top of the variable airbag; a check valve installed at the bottom of the water tank, which includes a body part, a top connection part formed on the top of the body part, a bottom connection part formed at the bottom of the body part and a backflow prevention plate that opens or blocks the flow path of the top connection part; a water tank discharge tube where one end is connected with a hole formed at the bottom of the one side of the water tank, and the other end is connected with the top connection part of the check valve; an electric heater whose one end is connected with the bottom connection part of the check valve to heat the water supplied from the water tank; a discharge tube that is connected with the other end of the electric heater to feed the water heated at the electric heater to a heating zone; a water tank suction part that is formed to interface with a hole formed at the bottom of the other side of the water tank; and a suction tube whose one end is connected with the water tank suction part.

### BRIEF DESCRIPTION OF THE DRAWINGS

The above and other objects, features and advantages of the present invention will be more apparent from the following detailed description taken in conjunction with the accompanying drawing, in which:
FIG. 1 is a schematic view illustrating a natural circulation boiler for heating according to the first exemplary embodiment of the present invention;
FIG. 2 is a schematic perspective view illustrating a water tank of the boiler according to the present invention;
FIG. 3 is a schematic configuration view illustrating a check valve shown in FIG. 1;
FIG. 4 is a schematic perspective view illustrating a check valve;
FIGS. 5 and 6 are schematic perspective views illustrating an electric heater according to the present invention;
FIGS. 7 and 8 are schematic configuration views and operational state views of a check valve of a natural circulation boiler for heating according to the second exemplary embodiment of the present invention;
FIG. 9 is a schematic configuration view illustrating a check valve of a natural circulation boiler for heating according to the third exemplary embodiment of the present invention;
FIG. 10 is a schematic configuration view illustrating a check valve of a natural circulation boiler for heating according to the fourth exemplary embodiment of the present invention;
FIGS. 11 and 12 are schematic configuration views and operational state views of a natural circulation boiler for heating according to the fifth exemplary embodiment of the present invention;
FIG. 13 is a schematic configuration view illustrating a natural circulation boiler for heating according to the sixth exemplary embodiment of the present invention; and
FIG. 14 is a schematic configuration view illustrating a natural circulation boiler for heating according to the seventh exemplary embodiment of the present invention.

### DETAILED DESCRIPTION OF EXEMPLARY EMBODIMENTS

Hereinafter, preferred embodiments of the present invention will be described in detail with reference to the accompanying drawing. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

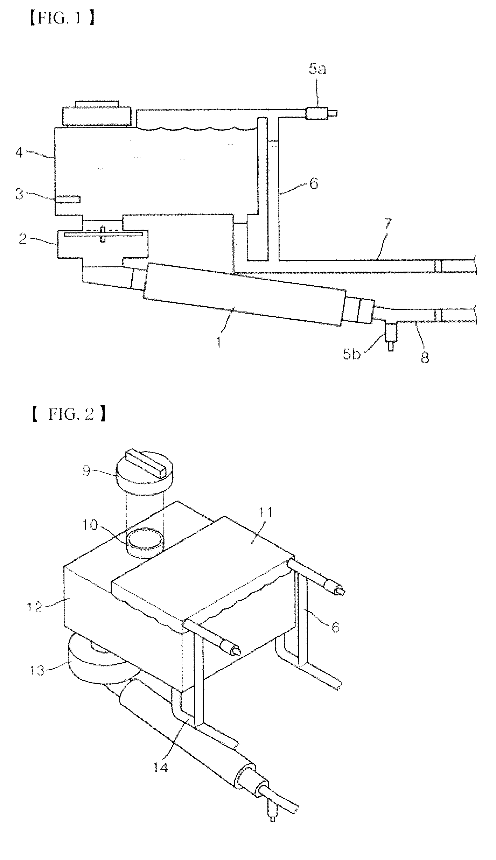

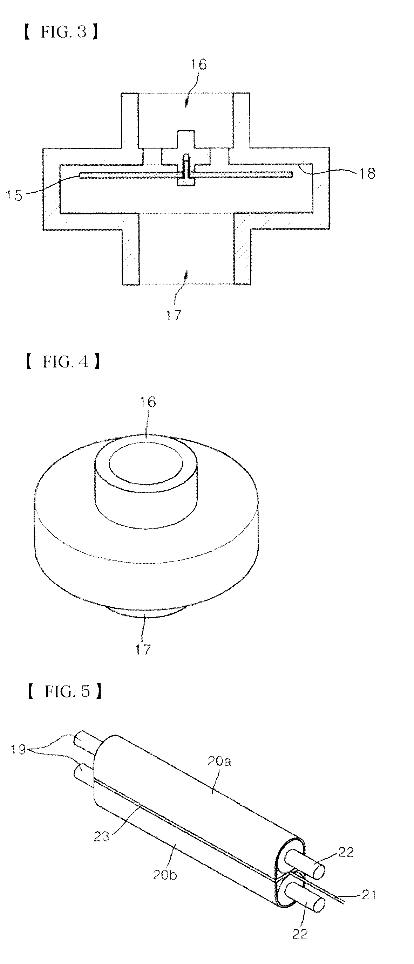

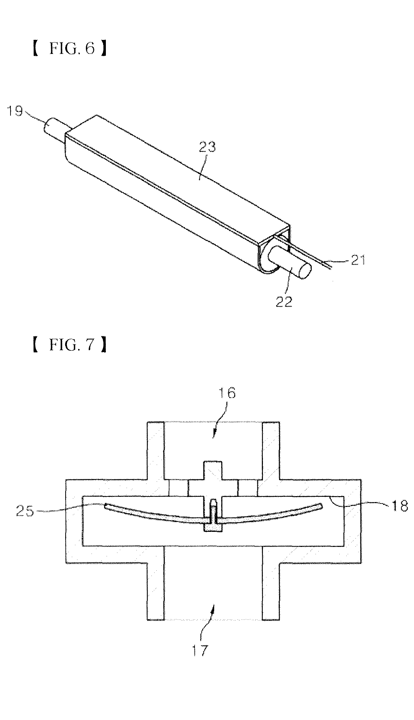

FIG. 1 is a schematic view illustrating a natural circulation boiler for heating according to the first exemplary embodiment of the present invention, FIG. 2 is a schematic perspective view illustrating a water tank of the boiler according to the present invention, FIG. 3 is a schematic configuration view illustrating a check valve shown in FIG. 1, FIG. 4 is a schematic perspective view illustrating a check valve and FIGS. 5 and 6 are schematic perspective views illustrating an electric heater according to the present invention.

With reference to FIGS. 1 to 6, a natural circulation boiler for heating according to the first exemplary embodiment of the present invention will be examined.

The natural circulation boiler for heating according to the first exemplary embodiment includes an electric heater 1, a check valve 2, a water level sensor 3, a water tank 4, safety valves 5a and 5b, a pressure reduction tube 6, a suction tube 7, a discharge tube 8, a water tank discharge tube 13, a water tank suction part 14, the first and second heating tanks 20a and 20b and a heater 23.

The water tank 4 is formed to have a space for storing water and air inside. In the present exemplary embodiment, the water tank 4 is formed as a whole in a stepped cube or stepped cuboid shape, but the shape is not limited thereto, and the water tank 4 may be formed in various shapes such as a cylinder and a polypyramid.

On the top of the water tank 4 a water inlet 10 is formed, and a water tank cap 9 is installed at the water inlet 10. The water tank 4 is formed in a stepped shape, wherein the height of one side is formed to be lower than that of the other side, while the water inlet 10 is installed on the top of the one side, the other side of the water tank 4 is placed to be higher than the water inlet 10. If water is fed to the water tank 4, an air storage part 11 is formed on the top of the other side of the water tank 4, and a water storage part 12 is formed at the bottom of the air storage part 11.

At the bottom of the one side of the water tank 4, a hole is formed, and the hole is connected with the water tank discharge tube 13. The water tank discharge tube 13 is connected with a top connection part 16 and a bottom connection part 17 of the check valve 2 is connected with a connection part on the check valve side 19 of the electric heater 1.

The electric heater 1 includes the first and second heating tanks 20a and 20b which are respectively independent, and the heater 23 is installed between the heating tanks 20a and 20b. Moreover, the heater 23 is connected with an electric wire 21.

A connection part on the flow section side 22 of is connected with the discharge tube 8, and the safety valve 5b is installed at the discharge tube 8. The hole formed on the other side of the water tank 4 interfaces with the water tank suction part 14, and the water tank suction part 14 is connected with the suction tube 7.

In the suction tube 7 the pressure reduction tube 6 is formed to interface with the air storage part 11 on the top of the other side of the water tank 4, and the safety valve 5a is installed on the top of the pressure reduction tube 6. Moreover, the water level sensor is installed on the inner bottom surface of the water tank 4.

The water inlet 10 is installed to be lower than the top of the water tank 3, and when the water is fully fed, the air storage part 11 is always formed on the top of the water tank 4. The water storage part 12 is formed under the air storage part 11. The pressure in water vapor generated when the temperature of the water tank 4 rises is reduced through the pressure reduction tube 6 connected with the air storage part 11 and the suction tube 7.

As explained above, the water tank discharge tube 13 connected with the water tank 4 is connected with the check valve 2. The water stored in the water tank 4 is supplied to the electric heater 1 through the top connection part 16 of the check valve 2, the check valve 2 and the bottom connection part 17 of the check valve 2.

The water supplied to the first and second heating tanks 20a and 20b of the electric heater 1 is heated by the heater 23. In case of heating the water in the first and second heating tanks 20a and 20b, pressure is generated due to increase in temperature. The pressure generated at this time makes the backflow prevention plate 15 of the check valve 2 ascend momentarily, and the backflow prevention plate 15 is moved and attached toward the inner top surface of the body part 18 of the check valve 2. As a result, the backflow prevention plate 15 blocks the top connection part 16 of the check valve, which prevents the water from flowing backward to the water tank 4. Accordingly, the heated water flows toward the discharge tube, and the backflow prevention plate 15 is again returned to the original position when the water flows momentarily. The moment the backflow prevention plate 15 is returned to the original position, the water in the water tank 4 is supplied to the check valve 2, and the water heated by the electric heater 1 is supplied to a heating zone. As a result, it leads to natural circulation of water without a circulation pump.

Moreover, according as the electric heater 1, wherein the heater 23 is positioned in the center, and the first and second heating tanks 20a and 20b are installed on both sides thereof to be contacted with the heater 23, reduces the heating time, it is possible to increase the circulation speed, save electricity and reduce waste of energy.

Moreover, according as the present invention is constituted to enable the heated water to be circulated and entered to the boiler through the suction tube 7, and to enable the vapor generated due to temperature rise of the water stored in the water storage part 12 of the water tank 4 at this time, to be sucked into the suction tube 7 through the pressure reduction tube 6 via the air storage part 11, it can lead to 1/1 0 decrease in the pressure, compared to the boiler according to the prior art, to be used more safely.

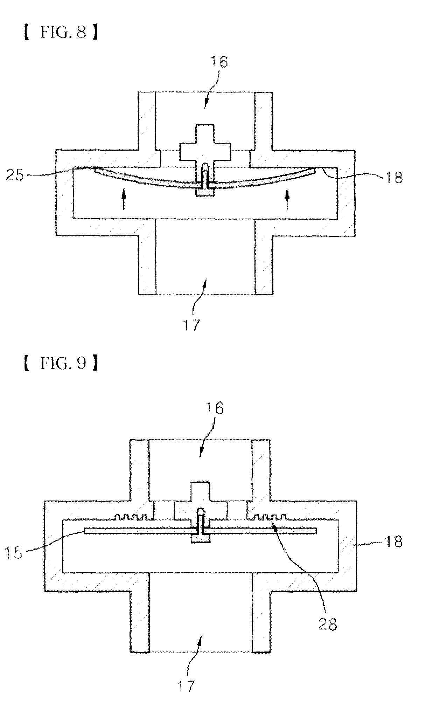

FIGS. 7 and 8 are schematic configuration views and operational state views of a check valve of a natural circulation boiler for heating according to the second exemplary embodiment of the present invention.

With reference to FIGS. 7 and 8, if a check valve of a natural circulation boiler for heating according to the second exemplary embodiment of the present invention is examined, the shape of the backflow prevention plate 25 of the check valve is formed differently from the above first exemplary embodiment. According to the present exemplary embodiment, the plane shape of the backflow prevention plate 25 is formed to correspond to the shape of the top connection part 16 of the check valve as a whole, and the size is formed to be larger than that of the top connection part 16 of the check valve.

The side shape of the backflow prevention plate 25 is formed to have the central area swollen downward, instead of a flat shape.

The pressure generated from temperature rise of the water when the water of the first and second heating tanks 20a and 20b is heated makes the backflow prevention plate 25 of the check valve 2 ascend momentarily, and the ascended backflow prevention plate 25 is moved and attached toward the inner top surface of the body part 18 of the check valve 2. At this time, according as the backflow prevention plate 25 is formed to have the central area swollen downward, only peripheral area of the backflow prevention plate 25 is attached on the inner top surface of the body part 8 of the check valve 2, which can prevent backflow of the water. Likewise, if a contact area between the backflow prevention plate 25 and the inner top surface of the body part 18 of the check valve is reduced, it can minimize noise that can be generated when the backflow prevention plate 25 is returned to the original position, so it leads to increase of convenience in use.

FIG. 9 is a schematic configuration view illustrating a check valve of a natural circulation boiler for heating according to the third exemplary embodiment of the present invention.

According to a check valve illustrated in FIG. 9, the backflow prevention plate 15 is formed in a flat shape, wherein a plurality of grooves 28 are formed on the inner top surface of the body part 18 of the check valve. If a plurality of grooves 28 are formed in a contact area between the backflow prevention plate 15 and the inner surface of the body part 18 of the check valve, it can reduce the contact area between them, even though the backflow prevention plate 15 is formed in a flat shape.

As a result, it can minimize noise generated at the moment the backflow prevention plate 15 is returned to the original position after being contacted with the inner top surface of the body part 18 of the check valve 2.

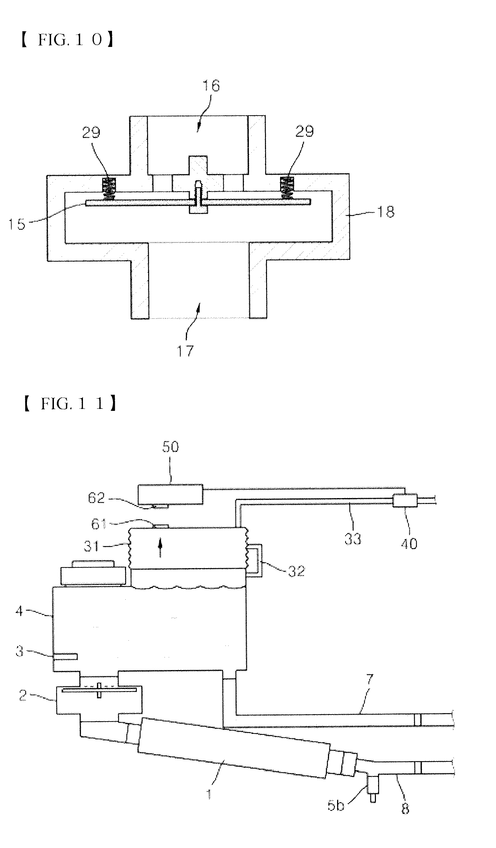

FIG. 10 is a schematic configuration view illustrating a check valve of a natural circulation boiler for heating according to the fourth exemplary embodiment of the present invention;

With reference to FIG. 10, if a check valve of a natural circulation boiler for heating according to the fourth exemplary embodiment of the present invention is examined, a spring member is installed on the backflow prevention plate 15 of the check valve 2. The pressure generated by temperature rise when the water in the first and second heating tanks 20a and 20b is heated gets the backflow prevention plate 15 of the check valve 2 ascend momentarily. When the ascended backflow prevention plate 15 is moved and attached toward the inner top surface of the body part 18 of the check valve 2, then returned to the original position, it is easily separated by elastic force of the spring member 29, which can minimize noise generated at the moment to be returned the original position and prevent circulation of the water due to malfunction of the backflow prevention plate 15.

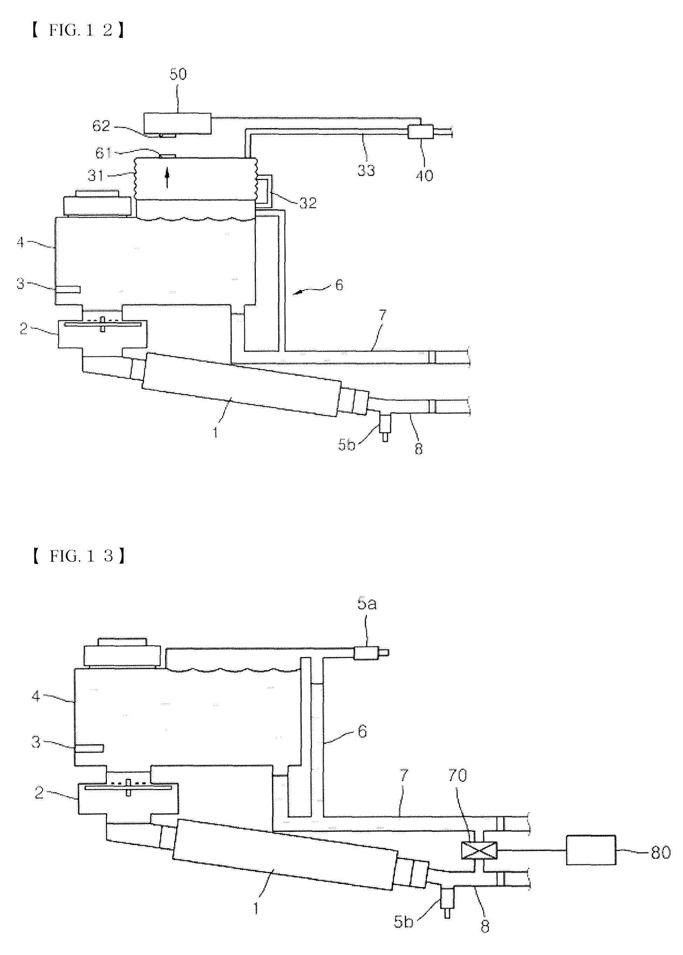

FIGS. 11 and 12 are schematic configuration views and operational state views of a natural circulation boiler for heating according to the fifth exemplary embodiment of the present invention;

The natural circulation boiler for heating according to fifth exemplary embodiment of the present invention includes an electric heater 1, a check valve 2, a water level sensor 3, a water tank 4, a safety valve 5b, a suction tube 7, a discharge tube 8, a variable airbag 31, a first part connected to the variable airbag 32, a second part connected to the variable airbag 33, an air discharge valve 40, an air discharge valve controller 50 and sensing parts 61 and 62.

On the top of the water tank 4 a water inlet is formed and the water tank 4 is formed in a stepped shape, wherein the height of one side of the water tank 4 is formed to be lower that of the other side and the water inlet is installed on the top of the one side. According as the other side of the water tank 4 is placed to be higher than the water inlet, an air storage part wherein air is stored on the top of the other side of the water tank 4 if the water is fed to the water tank 4.

On the top of the other side of the water tank 4 the variable airbag 31 is installed. According to the present exemplary embodiment, the variable airbag 31 is separately installed on the top of the other side of the stepped water tank 4, but it may be formed to make the size of a part that corresponds to the air storage part of the water tank 4. On one side of the variable airbag 31 the first part connected to the variable airbag 32 is formed to interface with the variable airbag 31 and the air storage part of the water tank 4. Moreover, on one side or the top of the variable airbag 31 the second part connected to the variable airbag 33 is formed to connect the variable airbag 31 with the air discharge valve 40.

The sensing parts 61 and 62 sense the volume of air stored in the variable airbag and transmit results sensed to the air discharge valve controller 50. The air discharge valve controller 50 controls the operation of the air discharge valve 40 according to the results sensed by the sensing parts 61 and 62. According to the present exemplary embodiment, the sensing parts 61 and 62 use a touch sensor, but not limited thereto, and they can sense the volume of air in the variable airbag 31 in various forms.

As shown in FIG. 11, the first terminal of the sensing part 61 is installed on the top end of the variable airbag 31, and the second terminal 62 is placed to be spaced apart from the first terminal 61 at a certain distance. When the volume of vapor generated in the water tank 4 is low, the variable airbag 31 is maintained at a small size. However, when the volume of vapor is continuously increased, the size of the variable airbag 31 becomes larger, and a contact signal is generated while the first and second terminals are contacted to each other, as shown in FIG. 12. Such contact signal is conveyed to the air discharge valve controller 50, and the air discharge valve controller 50 controls the air discharge valve 40 to be opened. As a result, the vapor stored in the variable airbag 31 is discharged to the outside through the air discharge valve 40 via the second connection part 33 of the variable airbag 31, which can reduce the pressure in the boiler. After a predetermined time, the air discharge valve controller 50 gives an order for the air discharge valve 40 to be closed.

As shown in the present exemplary embodiment, in case of installation of the variable airbag, when the pressure is generated, the variable airbag expands to make safe use of the boiler and reduce the generation of noise. Moreover, if it is impossible for the variable airbag to expand more, the vapor is discharged to the outside to control the pressure by reduction of a small quantity of moisture, which can make use of the boiler for long with no water refill.

FIG. 13 is a schematic configuration view illustrating a natural circulation boiler for heating according to the sixth exemplary embodiment of the present invention. The sixth exemplary embodiment shown in FIG. 13 is different in that a pressure reduction tube is further equipped, in comparison with the fifth exemplary embodiment, but all other configuration is similar, so the following will be explained with given priority to different configuration.

The natural circulation boiler for heating according to the sixth exemplary embodiment of the present invention includes an electric heater 1, a check valve 2, a water level sensor 3, a water tank 4, a safety valve 5b, a pressure reduction tube 6, a suction tube 7, a discharge tube 8, a first part connected to the variable airbag 31, a second part connected to the variable airbag 32, an air discharge valve 40, an air discharge controller 50 and sensing units 61 and 62.

On the top of the water tank 4 a water inlet is formed, and the water tank is formed in a stepped shape, wherein the height of one side of the water tank 4 is formed to be lower than that of the other side thereof, and the water inlet is installed on the top of the other side thereof. The other side of the water tank 4 is placed to be higher than the water inlet, so an air storage part wherein air is stored is formed on the top of the other side of the water tank 4 if the water is fed to the water tank 4. At the suction tube 7 the pressure reduction tube 6 is formed to interface with the air storage part on the top of the other side of the water tank 4. On the top of the other side of the water tank 4 the variable airbag 32 is installed. On one side of the variable airbag 32 the first part connected to the variable airbag 32 is formed to interface with the variable airbag 31 and the air storage part of the water tank 4. Moreover, on one side or the top of the variable airbag 31 the second part connected to the variable airbag 32 is formed to connect the variable airbag 31 with the air discharge valve 40.

The boiler is constructed to enable a portion of vapor generated by temperature rise of the water stored in the water tank 4 to expand the variable airbag and a portion of vapor to be sucked into the suction tube 7 through the pressure reduction tube 6 via the air storage part in order to control the pressure by discharge of a smaller quantity of vapor to the outside and reduction of a small quantity of moisture vapor, which can use the boiler for long with no water refill.

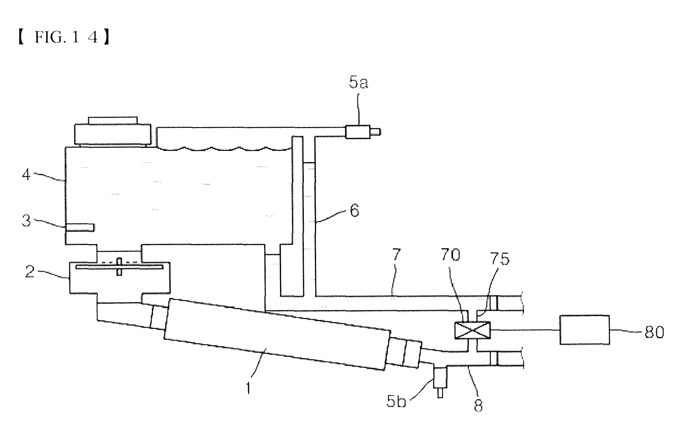

FIG. 14 is a schematic configuration view illustrating a natural circulation boiler for heating according to the seventh exemplary embodiment of the present invention.

The natural circulation boiler for heating according to the seventh exemplary embodiment of the present invention includes an electric heater 1, a check valve 2, a water level sensor 3, a water tank 4, safety valves 5a and 5b, a pressure reduction tube 6, a suction tube 7, a discharge tube 8, a pressure control valve 70 and a pressure sensor 80.

One end of the electric heater 1 is connected with the discharge tube 8, and the safety valve 5b is installed at the pressure reduction tube 5. A hole formed at the bottom of the other side of the water tank 4 is connected with the suction tube 7 through a water tank suction part (not shown). At the suction tube 7 the pressure reduction tube 6 is formed to interface with the air storage part 11 on the top of the other side of the water tank 4, and the safety valve 5a is installed on the top of the pressure reduction tube 6 and the water level sensor 3 is mounted on the inner bottom surface of the water tank 4.

Moreover, the connection tube 75 is formed between the suction tube 7 and the discharge tube 8 to interface with the suction tube 7 and the discharge tube 8, and the pressure control valve 70 is installed at the connection tube 75. The pressure sensor 80 senses the pressure applied to the connection tube 75 and controls the operation of the pressure control valve 70 and the electric heater 1 according to sensed results.

If a tube is blocked by external pressure or a diameter becomes smaller, in the boiler the circulation of water to a heating zone through the discharge tube 8 becomes uneasy, which can lead to increase in the pressure of the electric heater 1. The pressure sensor 80 sensing a pressure, opens the pressure control valve 70, if the pressure is higher than a predetermined pressure, and enables the water flowing to a heating zone through the discharge tube 8 to flow to the suction tube 7 in order to reduce a pressure, or enables the power of the electric heater to be shut down to prevent increase in the pressure of the electric heater 1, which can lead to safer use of the boiler.

As described above, the natural circulation boiler for heating according to the present invention produce the following effects.

First, it can enhance the safety in use considerably according to simple parts, easy assembling and decrease in the pressure inside the boiler.

Second, it can substitute materials for water tanks and pipes of the boiler by plastics, and can provide faster circulation of heated water and easier water refill by enabling the air storage part to be formed on the top of the water tank, even though the water is refilled in full.

Third, it can enhance the heating speed considerably by placement of the heating tanks on both sides of the heater.

It should be understood by those of ordinary skill in the art that various replacements, modifications and changes in the form and details may be made therein without departing from the spirit and scope of the present invention as defined by the following claims. Therefore, it is to be appreciated that the above described embodiments are for purposes of illustration only and are not to be construed as limitations of the invention.

## Claims

1. A natural circulation boiler for heating, comprising:
a water tank wherein the height of one side is formed to be lower than the height of the other side to include a water storage part wherein water is stored, and a water inlet is formed on the top of the one side;
a check valve installed at the bottom of the water tank, and including a body part, a top connection part formed on the top of the body part, a bottom connection part formed at the bottom of the body part and a backflow prevention plate that opens or blocks the flow path of the top connection part;
a water discharge tube wherein one end is connected with the bottom connection part of the check valve and the other end is connected with the top connection part of the check valve;
an electric heater wherein one end is connected with the bottom connection part of the check valve to heat the water supplied from the water tank;
a discharge tube connected with the other end of the electric heater to feed the water heated at the electric heater to a heating zone;
a water tank suction part formed to interface with a hole formed at the bottom of the other side of the water tank;
a suction tube whose one end is connected with the water tank suction part; and
a pressure reduction tube formed such that one end interfaces with the suction tube, and the other end interfaces with the air storage part on the top of the other side of the water tank.

2. The boiler of claim 1, wherein the electric heater includes first and second heating tanks, wherein a heater is installed between the heating tanks.

3. The boiler of claim 1, further comprising a safety valve that is installed at the discharge tube.

4. The boiler of claim 1, further comprising a safety valve that is installed at the pressure reduction tube.

5. The boiler of claim 1, further comprising a water level sensor installed at the bottom of the water tank, which senses the level of water stored in the water tank.

6. The boiler of claim 1, wherein the plane shape of the backflow prevention plate of the check valve is formed to correspond to that of the top connection part, and the size is formed to be larger than the diameter of the top connection part.

7. The boiler of claim 1, wherein the side shape of the backflow prevention plate of the check valve is formed to have the central area swollen downward.

8. The boiler of claim 1, wherein the backflow prevention plate of the check valve is formed in a flat shape, wherein a plurality of grooves are formed on the inner top surface of the body part of the check valve.

9. The boiler of claim 1, wherein the check valve further includes a spring member that is installed on the top of the backflow prevention plate.

10. The boiler of claim 1, further comprising:
a connection tube that interfaces the suction tube and the discharge tube;
a pressure control valve installed at the connection tube; and
a pressure sensor that senses a pressure applied to the connection tube, and controls the operation of the pressure control valve and the electric heater according to sensed results.

11. A natural circulation boiler for heating, comprising:
a water tank wherein the height of one end is formed to be lower than that of the other end to include a water storage part wherein water is stored and an air storage part wherein air is stored, and a water inlet is formed on the top of the one side;
a variable airbag installed on the top of the other side of the water tank;
a first part connected to the variable airbag that is formed on one side of the variable airbag to be connected with the air storage part of the water tank;
a second part connected to the variable airbag connected with the variable airbag through the second part connected to the variable airbag that is formed on one side or the top of the variable airbag;
an air discharge valve connected with the variable airbag through the second part connected to the variable airbag that is formed on one side or the top of the variable airbag;
a check valve installed at the bottom of the water tank, which includes a body part, a top connection part formed on the top of the body part, a bottom connection part formed at the bottom of the body part and a backflow prevention plate that opens or blocks the flow path of the top connection part;
a water tank discharge tube wherein one end is connected with a hole formed at the bottom of the one side of the water tank, and the other end is connected with the top connection part of the check valve;
an electric heater whose one end is connected with the bottom connection part of the check valve to heat the water supplied from the water tank;
a discharge tube that is connected with the other end of the electric heater to feed the water heated at the electric heater to a heating zone;
a water tank suction part that is formed to interface with a hole formed at the bottom of the other side of the water tank; and
a suction tube wherein one end is connected with the water tank suction part.

12. The boiler of claim 11, further comprising:
a sensing part for sensing the volume of air stored in the variable airbag; and
an air discharge valve controller that controls the operation of the air discharge valve according to results sensed by the sensing part.

13. The boiler of claim 11 or 12, further comprising a pressure reduction tube is formed such that one end interfaces with the suction tube, and the other end interfaces with the air storage part on the top of the other side of the water tank.
